# FASCICULE DE BREVET EUROPEEN

(11) **EP 1 459 249 B1**
(45) Date de publication et mention de la délivrance du brevet: **14.01.2009**
(21) Numéro de dépôt: 02799098.5
(22) Date de dépôt: 18.12.2002
(51) Int. Cl.: G06K 19/077

(54) **CARTE A PUCE A MODULE DE SURFACE ETENDUE**
CHIP KARTE MIT EINEM GROSSFLÄCHIGEN MODUL
SMART CARD WITH EXTENDED SURFACE MODULE

(30) Priorité: 20.12.2001 FR 0117054
(43) Date de publication de la demande: 22.09.2004
(73) Titulaire: Gemalto SA, 92190 Meudon (FR)
(72) Inventeur: ODDOU, Laurent, F-13600 La Ciotat (FR); OTTOBON, Stéphane, F-13600 La Ciotat (FR)
(86) Numéro de dépôt international: PCT/FR2002/004429
(87) Numéro de publication internationale: WO 2003/054790

(56) Documents cités:
- DE-A- 4 218 923
- DE-U- 29 503 249
- FR-A- 2 783 750
- FR-A- 2 794 264
- US-A- 5 681 356
- US-A- 5 852 289
- US-A- 6 065 681

## Description

La présente invention concerne une carte à puce et plus précisément une carte à puce comportant une carte porteuse d'un module constitué d'un support supportant lui-même au moins une puce électronique, ce support étant fixé sur une surface de la carte.

Une carte à puce connue est constituée d'une carte en matière plastique de format standardisé, dont deux formats sont le type « carte bancaire » défini par la norme ISO 7810 et le type « minicarte » SIM pour la téléphonie mobile. Elle porte un module électronique constitué d'un support formé d'une feuille de matière diélectrique éventuellement pourvue de circuits imprimés et supportant une puce électronique, par exemple une mémoire électronique. En règle générale, cette puce est collée sur une face du support et protégée par une couche de résine époxy formant surépaisseur sur le support. Cette face sera dite ci-après face arrière.

Pour la fixation du module sur la carte, cette dernière comporte une première cavité d'une première profondeur et une seconde cavité d'une seconde profondeur réalisée dans le fond de la première cavité et destinée à recevoir puce et résine. Le support est collé dans la première cavité autour de la seconde cavité. La première cavité a une surface totale égale à la surface du module qui est donc mis en place par encastrement dans celle-ci. L'épaisseur d'une telle carte est normalisée et d'environ 800 microns, la première profondeur est d'environ 200 microns et la seconde profondeur est d'environ 400 microns.

Le document FR-2-794-264 décrit une carte à puce à contacts selon le préambule de la revendication 1. Le document US 5, 852, 289 décrit une carte à puce sans contact comprenant un corps constituée de deux couches entre lesquelles est inséré un module électronique. Une cavité est pratiquée dans une des couches pour recevoir la puce du module, et le support du module est fixé, du côté opposé à la puce, dans une cavité moins profonde pratiquée sur la surface interne de l'autre couche. Lorsque les deux couches de constitution du corps de carte sont laminées, la puce du module est insérée dans la cavité la plus profonde taudis que le support est logé dans la cavité la moins profonde d'une des couches, de sorte que la carte ne présente aucune surépaisseur.

Il est actuellement recherché de stocker de nombreuses données sur de telles cartes à puce et en conséquence de mettre en place des modules plus grands ou de mettre en place plusieurs modules sur une seule carte. Ceci afin de réaliser des cartes mémoires haute capacité pouvant stocker des annuaires, des musiques, des films...

L'agencement actuellement utilisé présente plusieurs problèmes.

La surface de collage du support du module peut s'avèrer insuffisante et entraîner une mauvaise fixation de ce dernier, en particulier dans le cas de puce de grande taille. En effet, cette surface de collage se limite au fond de la première cavité hors la seconde cavité recevant la puce et-sa résine de protection. En conséquence, plus la surface totale de la puce ou des puces est grande, plus cette surface de collage s'avère insuffisante puisque le rapport surface du module / surface de collage diminue.

Cet agencement pose aussi des problèmes de fabrication. Compte tenu de la profondeur de la première cavité, environ 200 microns, cette cavité doit être réalisée à une distance des bords de la carte imposée par les impératifs du procédé de moulage. Cette distance doit être environ également de 200 microns minimum. Il est en effet difficile et même impossible de réduire cette distance, car impossible d'injecter la matière plastique sur une très fine paroi. Ceci est un impératif de fabrication allant à l'encontre du besoin d'augmenter le format des modules, le format de la carte étant normalisé.

L'invention résout ces problèmes et propose une carte à puce à contacts comportant une carte porteuse d'un module constitué d'un support supportant lui-même au moins une puce électronique ainsi que lesdits contacts, ce support étant fixé sur une surface de la carte caractérisée en ce que ledit support s'étend sur ladite surface jusqu'à au moins un des bords de la carte.

Dans le cas de module comportant une puce de dimension standard actuelle (soit environ 10 mm x 8 mm avec la goutte de résine de protection comprise), la solution de l'invention permet d'augmenter la surface de collage du module sur la carte et donc d'augmenter la fiabilité de cette dernière. Cette augmentation de la surface de collage est obtenue par augmentation de la surface du support supportant la puce.

Et surtout, l'invention permet une fixation fiable de modules de grande dimension pourvus d'une ou plusieurs puces de grande dimension. Il est en effet possible d'agrandir la dimension de la seconde cavité sans diminuer la surface de collage du module sur la carte.

L'invention simplifie le procédé de fabrication de la carte simplifiant l'étape de moulage au bord de la carte en question, par suppression de la fine paroi présente en bordure de la carte.

Selon le mode de réalisation préféré, le dit support s'étend sur toute la surface de la carte.

Avantageusement, la carte comporte une cavité de réception dudit support s'étendant jusqu'à au moins un bord de la carte et réalisée par moulage ou par usinage.

Et, la carte peut comporter au moins une cavité de réception de la puce.

De préférence, la carte à puce est une minicarte.

L'invention est décrite ci-après plus en détail à l'aide de figures ne représentant qu'un mode de réalisation préféré de l'invention.
La figure 1 est une vue de face d'une minicarte SIM (Subscriber Indentification Module en anglais, pour téléphonie portable) détachable encore attachée à un support de présentation de format « carte bancaire », selon l'art antérieur.
La figure 2 est une vue en coupe selon II-II de la figure 1.
La figure 3 est une vue en coupe analogue selon l'invention.

Dans la description qui suit, il est question d'une minicarte SIM pour téléphonie portable, mais l'invention s'applique à toute carte à puce, quelle que soit son format et quelle que soit son application.

Une carte à puce 1 est constituée d'une carte en matière plastique de format standardisé 2. Elle porte un module électronique constitué d'un support 3 formé d'une feuille de matière plastique éventuellement pourvue de circuits imprimés et supportant une puce électronique 4, par exemple une mémoire électronique. En règle générale, cette puce 4 est collée sur une face du support 3 et protégée par une couche de résine époxy formant surépaisseur sur le support.

Les figures représentent une minicarte 1 attachée sur une carte support de format « carte bancaire » 5 n'ayant qu'une fonction de présentation. Pour utiliser la minicarte 1, cette dernière est détachée grâce à des languettes sécables l'entourant.

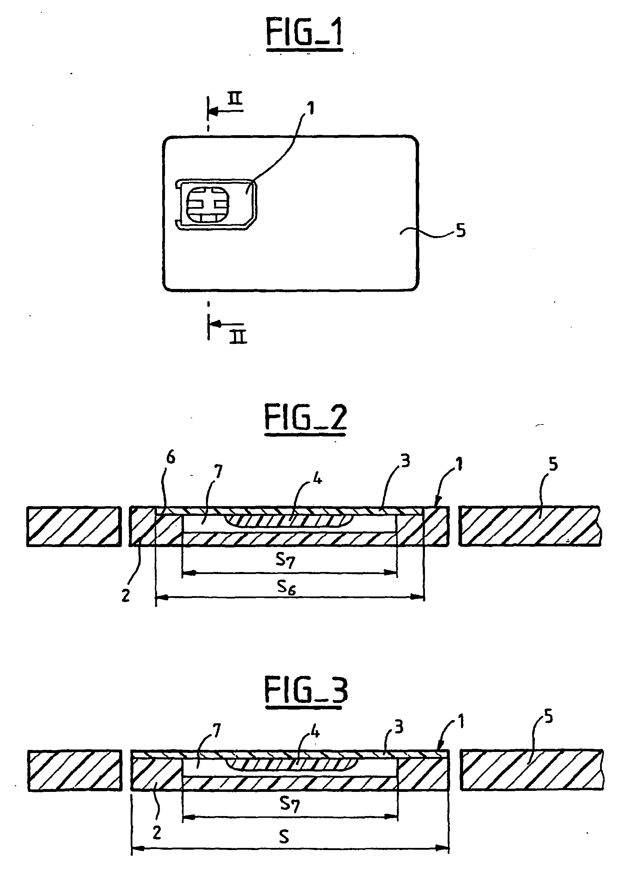

Les figures 1 et 2 réprésentent une carte à puce 1 selon l'art antérieur.

Pour la fixation du module 3, 4 sur la carte 2, cette dernière comporte une première cavité 6 d'une première profondeur et une seconde cavité 7 d'une seconde profondeur réalisée dans le fond de la première cavité 6 et destinée à recevoir puce et résine 4. Le support 3 est collé dans la première cavité 6 autour de la seconde cavité 7. La première cavité 6 a une surface totale égale à la surface du module 3, 4 qui est donc mis en place par encastrement dans celle-ci.

La surface de collage du module est donc égale à la surface de la première cavité S6 moins la surface de la seconde cavité S7.

La figure 3 est une vue en coupe analogue à la coupe de la figure 2 selon l'invention.

Ici, la surface de collage du module 3, 4 est égale à la surface S de la carte 2 moins la surface de la cavité S7 destinée à recevoir la puce et la résine 4.

Selon l'invention, la surface de collage s'étend jusqu'à au moins un des bords de la carte 2 et de préférence , comme représenté, elle s'étend jusqu'à tous les bords de la carte 2. En d'autres termes, le support 3 du module collé s'étend sur toute la surface de la carte 2. Et dans ce cas, seule la cavité 7 est réalisée sur la carte 2 d'épaisseur inférieure à celle selon l'art antérieur. Cette cavité 7 peut être réalisée par moulage ou usinage.

L'invention permet donc, à dimension de carte standardisée, d'augmenter la surface de collage du module 3, 4 sur la carte 2 et donc d'augmenter la fiabilité de cette dernière.

Elle permet également et essentiellement de fixer sur cette carte des modules de plus grande taille pourvu de puces de plus grande taille ou plus nombreuses. Il va de soi que plusieurs cavités 7 peuvent être réalisées sur la carte 2 pour recevoir plusieurs puces.

## Revendications

1. Carte à puce (1) à contacts comportant une carte (2) porteuse d'un module constitué d'un support (3) supportant lui-même au moins une puce électronique (4) ainsi que lesdits contacts, ce support (3) étant fixé sur une surface de ladite carte (2), **caractérisée en ce que** ledit support s'étend sur ladite surface jusqu'à au moins un des bords de ladite carte (2).

2. Carte à puce selon la revendication 1, **caractérisée en ce que** le dit support (3) s'étend sur toute la surface de ladite carte (2).

3. Carte à puce selon la revendication 1, **caractérisée en ce que** ladite carte (2) comporte une cavité de réception dudit support (3) s'étendant jusqu'à au moins un bord de ladite carte (2) et réalisée par moulage.

4. Carte à puce selon la revendication 1, **caractérisée en ce que** ladite carte (2) comporte une cavité de réception dudit support (3) s'étendant jusqu'à au moins un bord de ladite carte (2) et réalisée par usinage.

5. Carte à puce selon l'une des revendications précédentes, **caractérisée en ce que** ladite carte (2) comporte au moins une cavité de réception (7) de la ou des puce (s) (4).

6. Carte à puce selon l'une des revendications précédentes, **caractérisée en ce que** ladite carte à puce (1) est une minicarte.

## Claims

1. A contact chip card (1) comprising a card (2) carrying a module composed of a support (3), which supports at least one electronic chip (4), as well as said contacts, such support (3) being fixed on a surface of said card (2), **characterized in that** said support extends on said surface up to at least one edge of said card (2).

2. A chip card according to claim 1, **characterized in that** said support (3) extends on the whole surface of said card (2).

3. A chip card according to claim 1, **characterized in that** said card (2) includes a cavity for receiving said support (3) extending up to at least one edge of said card (2) and obtained by moulding.

4. A chip card according to claim 1, **characterized in that** said card (2) includes a cavity for receiving said support (3) extending up to at least one edge of said card (2) and obtained by machining.

5. A chip card according to one of the preceding claims, **characterized in that** said card (2) includes at least a cavity for receiving (7) the card(s) (4).

6. A chip card according to one of the preceding claims, **characterized in that** said chip card (1) is a mini card.

## Patentansprüche

1. Chipkarte (1) mit Kontakten, umfassend eine Trägerkarte (2) eines Moduls, das von einem Träger (3) gebildet wird, der mindestens einen elektronischen Chip (4) sowie die genannten Kontakte aufweist, wobei dieser Träger (3) auf einer Oberfläche der genannten Karte (2) befestigt ist, **dadurch gekennzeichnet, dass** sich der genannte Träger über die genannte Oberfläche bis hin zu mindestens einem der Ränder der genannten Karte (2) erstreckt.

2. Chipkarte gemäß Anspruch 1, **dadurch gekennzeichnet, dass** sich der genannte Träger (3) über die gesamte Oberfläche der genannten Karte (2) erstreckt.

3. Chipkarte gemäß Anspruch 1, **dadurch gekennzeichnet, dass** die genannte Karte (2) einen Aufnahmehohlraum für den genannten Träger (3) umfasst, der sich bis hin zu mindestens einem Rand der genannten Karte (2) erstreckt und durch Formerei hergestellt wird.

4. Chipkarte gemäß Anspruch 1, **dadurch gekennzeichnet, dass** die genannte Karte (2) einen Aufnahmehohlraum für den genannten Träger (3) umfasst, der sich bis hin zu mindestens einem Rand der genannten Karte (2) erstreckt und durch Bearbeitung hergestellt wird.

5. Chipkarte gemäß einem der vorangehenden Ansprüche, **dadurch gekennzeichnet, dass** die genannte Karte (2) mindestens einen Aufnahmehohlraum (7) für den oder die Chip(s) (4) aufweist.

6. Chipkarte gemäß einem der vorangehenden Ansprüche, **dadurch gekennzeichnet, dass** die genannte Chipkarte (1) eine Minikarte ist.
